# EUROPÄISCHE PATENTANMELDUNG

(11) **EP 4 589 469 A1**
(43) Veröffentlichungstag der Anmeldung: **23.07.2025**
(21) Anmeldenummer: 24152220.0
(22) Anmeldetag: 16.01.2024
(51) Int. Cl.: G06K 7/10

(54) **VERFAHREN UND ANORDNUNG ZUM BESTIMMEN EINES DURCHFAHRENS EINES FUNKETIKETTEN-ERFASSUNGSTORS DURCH EIN FUNKETIKETT**

(71) Anmelder: Siemens Aktiengesellschaft, 80333 München (DE)
(72) Erfinder: Hein, Daniel, 81549 München (DE); Häuser, Markus, 91463 Dietersheim (DE); Limmer, Steffen, 80636 München (DE); Strixner, Ferdinand, 81739 München (DE); Weber, Marc Christian, 80339 München (DE)
(74) Vertreter: Siemens Patent Attorneys

(57) **Zusammenfassung**

Es wird ein Verfahren zum Bestimmen eines Durchfahrens eines Funketiketten-Erfassungstors (A, B, C, D, E, F, G) durch ein Funketikett (RF) in einem Überwachungsbereich (UB) vorgeschlagen. Mehrere Funketiketten-Erfassungstore (A, B, C, D, E, F, G) sind in dem Überwachungsbereich (UB) angeordnet und die Funketiketten-Erfassungstore (A, B, C, D, E, F, G) weisen eine oder mehrere Antennen auf, um Funksignale eines Funketiketts (RF) in dem Überwachungsbereich (UB) zu empfangen. Das Verfahren weist die Schritte auf:
a) Empfangen von Funksignalen eines Funketiketts (RF) durch zumindest eines der mehreren Funketiketten-Erfassungstore (A, B, C, D, E, F, G),
b) Erfassen des Signalstärkeverlaufs jedes der durch zumindest eines der mehreren Funketiketten-Erfassungstore (A, B, C, D, E, F, G) empfangenen Funksignale, und
c) Bestimmen, welches der mehreren Funketiketten-Erfassungstore (A, B, C, D, E, F, G) durch das Funketikett (RF) durchfahren wurde, basierend auf den erfassten Signalstärkeverläufen.

## Beschreibung

Die vorliegende Erfindung betrifft ein Verfahren zum Bestimmen eines Durchfahrens eines Funketiketten-Erfassungstors sowie eine Anordnung zum Bestimmen eines Durchfahrens eines Funketiketten-Erfassungstors.

Zum Überwachen oder Erfassen von Gütern, Waren oder anderen Gegenständen, beispielsweise in Lagerräumen, können Funketiketten, z.B. sogenannte RFID-Transponder oder RFID-Tags (RFID: radio-frequency identification) eingesetzt werden. Derartige Funketiketten können mittels hochfrequenter Radiowellen von entsprechenden Lesegeräten ausgelesen werden. In vielen Fällen wird dabei das Funketikett durch vom Lesegerät erzeugte Radiowellen mit Energie versorgt und benötigt somit keine eigene Energieversorgung. Funketiketten erlauben eine einfache Identifikation von entsprechend etikettierten Objekten sowie eine Übertragung von Information zwischen Funketikett und Lesegerät.

Die RFID-Technologie ermöglicht es, die Annäherung von Funketiketten in Bezug auf eine Sende-/Empfangsstation, beispielsweise ein sogenanntes RFID-Gate oder Funketiketten-Erfassungstor, zu erkennen. Ein solches Funketiketten-Erfassungstor weist üblicherweise mehrere Antennen auf, die die Funksignale der Funketiketten empfangen und eine Prognose über die Position und/oder Durchfahrt eines Objekts mit einem Funketikett ermöglichen.

In bisherigen Systemen wird beispielsweise maschinelles Lernen (ML) eingesetzt, um in einer Anordnung aus einem oder mehreren RFID-Gates und sich in dieser Anordnung bewegenden Funketiketten, die an sich bewegenden Objekten angebracht sind, Zusammenhänge zwischen Messwerten der Antennen und der Position der Funketiketten zu erkennen. Hierbei werden Modelle in einem Maschinenlernmodul unter Verwendung eines Trainingsaufbaus aus Antennen und Funketiketten trainiert. Diese Modelle können dann beispielweise in verschiedenen Lagersystemen verwendet werden, um dort ebenfalls die Positionen von Funketiketten zu bestimmen.

Allerdings wird in diesen Systemen eine Prognose der Position und/oder Durchfahrt basierend auf den Daten eines einzelnen Tores erstellt, d.h. es werden nur Daten zur Prognose berücksichtigt, welche von den Antennen eines einzelnen Tores empfangen wurden. Die Funketiketten werden zwar möglicherweise auch von den Antennen anderer Tore gesehen bzw. deren Funksignale empfangen, von diesen Toren aber im besten Falle als irrelevant klassifiziert und ignoriert. Im schlechtesten Falle werden die Funketiketten fälschlicherweise einer Durchfahrt im benachbarten Tor zugeordnet, was zu Dateninkonsistenzen führt.

Dies kann durch teurere Hardware gelöst werden, welche genauere Daten und/oder eine höhere Datenrate (auch im Falle einer Vielzahl an im Bereich des Tores befindlichen Funketiketten) liefert. Auch kann der Sendebereich der Antennen der Tore durch z.B. Metallblenden eingeschränkt werden, um Fehlklassifikationen zu vermeiden.

Vor diesem Hintergrund besteht eine Aufgabe der vorliegenden Erfindung darin, eine Möglichkeit bereitzustellen, in Anordnungen mit mehreren Funketiketten-Erfassungstoren die Genauigkeit und Robustheit der Positions- und/oder Durchfahrtserkennung kostengünstig und auf einfache Weise zu verbessern.

Gelöst wird diese Aufgabe durch ein Verfahren mit den Merkmalen des Patentanspruchs 1 und durch eine Anordnung mit den Merkmalen des Patentanspruchs 13.

Vorteilhafte Ausführungsformen und Weiterbildungen der Erfindung sind in den abhängigen Ansprüchen angegeben.

Das vorgeschlagene Verfahren dient zum Bestimmen eines Durchfahrens eines Funketiketten-Erfassungstors durch ein Funketikett in einem Überwachungsbereich. In dem Überwachungsbereich sind mehrere Funketiketten-Erfassungstore, auch RFID-Tore oder RFID-Gate genannt, angeordnet. Die Funketiketten-Erfassungstore weisen eine oder mehrere Antennen, beispielsweise vier Antennen, auf, um Funksignale eines Funketiketts in dem Überwachungsbereich zu empfangen. Der Überwachungsbereich kann beispielsweise ein Lagerraum sein und die Tore dienen dazu, eine Einfahrt oder Ausfahrt in oder aus dem Lagerraum zu detektieren. Die Funketiketten, z.B. RFID-Tags, können an verschiedenen Objekten, wie Paketen, Containern, Gabelstaplern oder ähnlichem angebracht sein.

Gemäß dem vorgeschlagenen Verfahren werden, wenn sich ein Funketikett durch den Überwachungsbereich bewegt, in einem ersten Schritt a) Funksignale des Funketiketts durch zumindest eines der mehreren Funketiketten-Erfassungstore empfangen. Die Antennen der Funketiketten-Erfassungstore können so an dem jeweiligen Funketiketten-Erfassungstor angebracht sein, dass sie das Funksignal bei einer Annäherung des Funketiketts an das jeweilige Tor in unterschiedlicher Stärke und/oder zu einem anderen Zeitpunkt empfangen. Des Weiteren empfangen die einzelnen Tore das Funksignal des Funketiketts, aufgrund ihrer eigenen Anordnung im Überwachungsbereich und aufgrund der Bewegung und/oder Position des Funketiketts, ebenfalls in unterschiedlicher Stärke und/oder zu verschiedenen Zeitpunkten.

Das Verfahren erfasst daher in einem weiteren Schritt b) den Signalstärkeverlauf jedes der durch zumindest eines der mehreren Funketiketten-Erfassungstore empfangenen Funksignale. Der Signalstärkeverlauf kann sich für jedes Tor aus den Empfangssignalen der einzelnen Antennen zusammensetzen. Es werden also für verschiedene Positionen des Funketiketts durch mehrere Tore bestimmte Signalstärken, auch RSSI-Werte (Received Signal Strength Indicator) genannt, erfasst.

Basierend auf den erfassten Signalstärkeverläufen kann das Verfahren anschließend in Schritt c) bestimmen, welches der mehreren Funketiketten-Erfassungstore durch das Funketikett durchfahren wurde. Hierbei werden auf vorteilhafte Weise die Informationen der mehreren Funketiketten-Erfassungstore zusammengefasst und gemeinsam verwendet, um zu bestimmen, ob ein Tor durch ein Funketikett durchfahren wurde und welches Tor durchfahren wurde. Dies kann beispielsweise aus dem Signalstärkeverlauf der einzelnen Tore ermittelt werden, wie weiter unten näher erläutert wird.

Durch die gemeinsame Verwendung der Daten von mehreren Funketiketten-Erfassungstoren ist es auch möglich, einen Defekt oder eine Störung eines Funketiketten-Erfassungstors abzufangen. In diesem Fall können die Daten der anderen Tore verwendet werden, um eine Durchfahrt durch das defekte Tor zu bestimmen. Das hier vorgeschlagene Verfahren hilft also dabei, auch im Falle von Störungen oder Kapazitätsproblemen der einzelnen Funketiketten-Erfassungstore sichere Prognosen für eine Vielzahl an Funketiketten zu liefern.

Gemäß einer Ausführungsform empfängt jedes der Funketiketten-Erfassungstore ein Funksignal von dem Funketikett und der Signalstärkeverlauf jedes empfangenen Funksignals wird bestimmt. Wenn alle Tore funktionieren und keine Störung vorliegt, gibt der Signalstärkeverlauf dann entsprechend an, wie nah ein Funketikett dem jeweiligen Tor im Zuge seiner Bewegung kommt. Fällt der Empfang an einem Tor aus, kann beispielsweise auf einen Defekt des Tores geschlossen werden. Diese Information kann dann ebenfalls bei der Bestimmung des Durchfahrens eines Funketiketten-Erfassungstors verwendet werden.

Gemäß einer weiteren Ausführungsform wird ein Maschinenlernmodul zum Bestimmen des Durchfahrens eines Funketiketten-Erfassungstors verwendet.

Ein solches Maschinenlernmodul kann beispielsweise künstliche neuronale Netze, rekurrente neuronale Netze, faltende neuronale Netze, LSTM-Netze, Deep-Learning-Architekturen, Support-Vektor-Maschinen, bayessche neuronale Netze, Autoencoder, Gaußprozesse, datengetriebene Regressionsmodelle, K-nächste-Nachbarn-Klassifikatoren, physikalische Modelle oder Entscheidungsbäume aufweisen oder auf solchen basieren. Üblicherweise wird das Maschinenlernmodul zunächst trainiert, beispielsweise in der Anordnung, d.h. der Kombination aus Funketiketten-Erfassungstoren, Funketiketten und sonstiger Umgebung, in der es auch anschließend eingesetzt werden soll.

Während des Trainings kann ein an einem Objekt angebrachtes Funketikett mit dem Objekt durch den Überwachungsbereich bewegt werden. Auf diese Weise kann das Training unter besonders realitätsnahen Bedingungen durchgeführt werden. Insbesondere kann eine mögliche Beeinflussung eines Signalstärkeverlaufs durch ein jeweils etikettiertes Objekt beim Training berücksichtigt werden.

Es können dann Signale von den Funketiketten-Erfassungstoren empfangen werden und zusätzlich, beispielsweise durch Lokalisierungssensoren, die Position des Funketiketts bzw. Objekts bestimmt werden. Als Lokalisierungssensor kann ein optischer Sensor, eine Kamera, ein funkwellenbasierter Sensor, ein Annäherungssensor und/oder ein Laserscanner verwendet werden. Insbesondere kann der Lokalisierungssensor auf Basis eines Lidar-, Radar-, RTLS-(Real-Time Locating System), Bluetooth-, W-LAN- oder 5G-Sytems realisiert werden. Vorzugsweise können mehrere derartige Lokalisierungssensoren, insbesondere mehrere Kameras eingesetzt werden.

Anschließend wird anhand der erfassten aktuellen Position und der Signalstärkeverläufe der empfangenen Signale das Maschinenlernmodul trainiert, um anhand zumindest eines Signalstärkeverlaufs eine korrespondierende aktuelle Position eines Funketiketts zu reproduzieren.

Unter einem Training wird hier allgemein eine Optimierung einer Abbildung von Eingabesignalen eines Maschinenlernmoduls auf dessen Ausgabesignale verstanden. Diese Abbildung wird nach einem oder mehreren vorgegebenen Kriterien während einer Trainingsphase optimiert. Als Kriterium kann insbesondere bei Prognosemodellen ein Prognosefehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden. Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren.

Ein solches antrainiertes Maschinenlernmodul kann gemäß einer Ausführungsform eine Einzelprognose für jedes Funketiketten-Erfassungstor basierend auf dem jeweiligen durch das entsprechende Funketiketten-Erfassungstor erfassten Signalverlauf bestimmen und die Einzelprognosen aggregieren, um zu bestimmen, welches der mehreren Funketiketten-Erfassungstore durchfahren wurde. Gemäß dieser Ausführungsform wird also zunächst für jedes Tor eine eigene Prognose der Position/Durchfahrt eines Funketiketts erstellt und anschließend diese Einzelprognosen zusammengefasst und gemeinsam bewertet. Alternativ ist es auch möglich, dass das Maschinenlernmodul die Rohdaten, d.h. die von den einzelnen Funketiketten-Erfassungstoren erfassten Signalverläufe, empfängt und diese aggregiert. Anschließend wird durch das Maschinenlernmodul eine Gesamtprognose erzeugt, um zu bestimmen, welches der mehreren Funketiketten-Erfassungstore durchfahren wurde.

Gemäß einer weiteren Ausführungsform weist das Bestimmen, welches der mehreren Funketiketten-Erfassungstore durch das Funketikett durchfahren wurde, einen Vergleich der Signalstärken der erfassten Signalstärkeverläufen auf. Selbst wenn jedes der Tore für sich alleine genommen einen Signalstärkeverlauf zeigt, der eine Durchfahrt nur mit einer vorhandenen Unsicherheit angibt, kann durch den Vergleich der Signalstärkeverläufe der mehreren Tore bestimmt werden, durch welches Tor sich das Funketikett bewegt hat. Das Ergebnis dieses Vergleiches gibt dabei mit einer geringeren Unsicherheit als die einzelnen Tore an, durch welches Tor sich das Funketikett bewegt hat. Der Vergleich der Signalstärkeverläufe stellt dabei eine einfache Möglichkeit für diese Bestimmung bereit.

Gemäß einer weiteren Ausführungsform wird, wenn detektiert wird, dass ein Funketiketten-Erfassungstor eine Störung aufweist, ein Durchfahren dieses Funketiketten-Erfassungstors basierend auf den durch die anderen Funketiketten-Erfassungstore erfassten Signalstärkeverläufen bestimmt. Eine Störung eines Tores kann etwa durch große Metallobjekte im Torbereich auftreten, oder darauf zurückzuführen sein, dass in Situationen mit vielen gleichzeitig vorbeifahrenden Funketiketten sich die Datenrate massiv verringert. Dies führt beispielsweise dazu, dass die Daten, die der Prognose für dieses gestörte Tor zur Verfügung stehen, nicht ausreichen, um eine korrekte Durchfahrt zu prognostizieren. Auch ist es möglich, dass an diesem einen, gestörten Tor, überhaupt keine Daten zur Verfügung stehen. Ein Einzelmodell, welches auf die Daten dieses Tores angewiesen ist, hätte in dieser Situation wenig Möglichkeiten, korrekte und robuste Prognosen abzuliefern. Durch die Kombination der Daten aus mehreren Toren, wie sie durch das vorgeschlagene Verfahren vorgenommen wird, können jedoch die Daten der übrigen, vorzugsweise benachbarten, Tore benutzt werden, um trotz der Störeinflüsse im Bereich des einen Tors gute Prognosen für eine Durchfahrt dieses Tores zu generieren. Insbesondere können dabei die Daten von Toren verwendet werden, an denen sich das Funketikett vorbeibewegt.

Gemäß einer Ausführungsform wird eine Störung eines Funketiketten-Erfassungstors detektiert, wenn die durch das entsprechende Funketiketten-Erfassungstor erfassten Signalstärkeverläufe aus vorherigen Daten unbekannt sind. Bei den vorherigen Daten kann es sich beispielsweise um Trainingsdaten des Maschinenlernmoduls handeln. Auch wenn überhaupt kein Funksignal detektiert wird, benachbarte Tore aber Funksignale empfangen, kann auf eine Störung eines Funketiketten-Erfassungstors geschlossen werden.

Gemäß einer weiteren Ausführungsform ist die Anordnung der Funketiketten-Erfassungstore in dem Überwachungsbereich bekannt, und das Durchfahren eines der Funketiketten-Erfassungstore wird durch das Bestimmen eines zeitlichen Zusammenhangs zwischen den erfassten Signalstärkeverläufen benachbarter Funketiketten-Erfassungstore bestimmt. Hierbei wird Hintergrundwissen der Anordnung der Funketiketten-Erfassungstore ausgenutzt. Wenn die Anordnung der Tore derart ist, dass beispielsweise bei einem Durchfahren eines ersten Tors und eines dritten Tors aufgrund der Anordnung zwangsläufig auch das zweite Tor durchfahren werden muss, kann der zeitliche Zusammenhang zwischen diesen Durchfahrten verwendet werden. Wenn in diesem Beispiel der Signalstärkeverlauf des ersten Tors und des dritten Tors eine Durchfahrt angibt, kann daraus geschlossen werden, dass auch das zweite Tor durchfahren wurde. Dies ist selbst dann der Fall, wenn für dieses Tor keine oder zu wenig Daten vorliegen. Auf diese Weise kann das Verfahren auch in Umgebungen eingesetzt werden, in denen beispielsweise nicht alle Tore mit Antennen zum Empfang von Funksignalen von Funketiketten ausgestattet sind.

Gemäß einer weiteren Ausführungsform werden die Schritte a) bis c) in einer Trainingsphase eines Maschinenlernmoduls durchgeführt, wobei die Signalstärkeverläufe als Trainingsdaten in das Maschinenlernmodul eingegeben werden. Wie bereits oben beschrieben, kann das Maschinenlernmodul in der Anordnung aus Funketiketten-Erfassungstoren trainiert werden. Hierzu werden vorzugsweise die beschriebenen Schritte a) bis c) durchgeführt, um das Maschinenlernmodul darauf zu trainieren, das Durchfahren eines Tores sicher prognostizieren zu können. Als Trainingsdaten können des Weiteren Positionsinformationen des Funketiketts verwendet werden, wie oben beschrieben ist.

Des Weiteren können als Trainingsdaten eine Anordnung der Funketiketten-Erfassungstore in das Maschinenlernmodul eingespeist werden. Die anschließende Prognose des Maschinenlernmoduls für Tordurchfahrten wird im Einsatz hierdurch auch deutlich robuster und genauer, da Daten von benachbarten Toren sowohl im Training als auch in der Ausführung benutzt werden. Auch in Situationen, in denen die Datenrate einzelner Funketiketten stark sinkt (z.B., wenn viele Funketiketten gleichzeitig im Empfangsbereich eines Tors vorhanden sind) kann die Anzahl der empfangen Signale eines Funketiketts erhöht werden, weil mehr Antennen (d.h. Antennen von mehreren Toren) zur Verfügung stehen. Die Signale von unterschiedlichen Toren zu unterschiedlichen Zeitpunkten haben zwar auch unterschiedliche Bedeutungen, aber durch die vorgegebene (feste) Struktur der Anordnung sind solche Muster auch schon in den Trainingsdaten enthalten und können vom Maschinenlernmodul mitgelernt werden.

Das Maschinenlernmodul wird in zumindest einem der Funketiketten-Erfassungstore eingesetzt, um eine Bestimmung des Durchfahrens des Funketiketten-Erfassungstors durchzuführen. In diesem Fall kann pro Tor ein Maschinenlernmodul vorgesehen sein, um jeweils eine Einzelprognose zu erstellen. Vorteilhafterweise wird das Maschinenlernmodul in mehreren Toren eingesetzt. Des Weiteren kann zusätzlich ein gemeinsames Maschinenlernmodul vorgesehen sein, das die Einzelprognosen empfängt und verarbeitet, oder es ist nur ein gemeinsames Maschinenlernmodul vorgesehen, das die (Roh-)Signale von mehreren Toren empfängt.

Gemäß einer weiteren Ausführungsform werden die oben beschriebenen Schritte a) bis c) zum Nachtrainieren des Maschinenlernmoduls durchgeführt. Ein solches Nachtraining kann im Betrieb der Anordnung erfolgen, um die Prognose zu verbessern und das Maschinenlernmodul an den realen Betrieb anzupassen. Auch kann ein solches Nachtraining verwendet werden, um ein Tor, welches noch keine solche Erfassung hat, mit einem Maschinenlernmodul auszustatten. Ein solches nachgerüstetes Maschinenlernmodul kann mit den bereits vorhandenen Trainingsdaten anderer Tore ausgestattet werden und direkt mit dem Einsatz beginnen. Über ein Nachtraining kann dieses Modul dann anschließend noch nachjustiert werden.

Beispielsweise in dem Fall von sequenziell angeordneten und durchfahrenen Toren können Informationen über die hintereinander erfolgte Durchfahrt durch eine Reihe von Toren es ermöglichen, zeitlich umgrenzte und mit Durchfahrtslabels versehene Daten zu erheben, mit denen wiederum Modelle für die beteiligten Tore entweder neu erstellt oder nachjustiert werden können. Dies würde es z.B. erlauben, in einer Fabrik mit vielen Toren nicht von Anfang an sämtliche Anlagen mit (vortrainierten) Modellen ausstatten zu müssen, sondern einige davon angepasst an die tatsächlichen realen Gegebenheiten erst im Nachgang oder Zug-um-Zug erstellen zu können. Die so gewonnenen Daten und Modelle können dann auch verwendet werden, um alle Maschinenlernmodule in der Anlage entsprechend der realen Verhältnisse anzupassen. Auf diese Weise ist es zum Beispiel möglich, dass keine spezielle Sensorik (z.B. Videokameras oder Lichtschranken) benötigt wird, um eindeutige Durchfahrtsszenarien zu markieren.

Gemäß einem weiteren Aspekt wird eine Anordnung zum Bestimmen eines Durchfahrens eines Funketiketten-Erfassungstors durch ein Funketikett in einem Überwachungsbereich vorgeschlagen. Die Anordnung ist insbesondere zum Ausführen der Verfahrensschritte des oben beschriebenen Verfahrens ausgebildet.

Wie auch oben bereits beschrieben, kann die Anordnung mehrere Funketiketten-Erfassungstore aufweisen, die in einem Überwachungsbereich angeordnet sind und jeweils dazu ausgebildet sind, ein Funksignal von einem Funketikett zu empfangen und einen Signalstärkeverlauf des empfangenen Funksignals zu bestimmen. Jedes Funketiketten-Erfassungstor weist dabei eine oder mehrere Antennen auf, die die Funksignale des Funketiketts empfangen.

Die Anordnung weist des Weiteren eine Verarbeitungseinheit auf, die dazu ausgebildet ist, die Signalstärkeverläufe von den Funketiketten-Erfassungstoren zu empfangen und basierend auf den erfassten Signalstärkeverläufen zu bestimmen, welches der mehreren Funketiketten-Erfassungstore durch das Funketikett durchfahren wurde. Beispielsweise kann die Verarbeitungseinheit ein wie oben beschriebenes Maschinenlernmodul aufweisen. Die Verarbeitungseinheit kann als zentrale Einheit vorgesehen sein, oder kann aus mehreren Untereinheiten gebildet sein, wobei die Untereinheiten an den verschiedenen Toren vorgesehen sind.

Das oben beschriebene Verfahren und die Anordnung können beispielsweise mittels eines oder mehrerer Prozessoren, Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das Verfahren zumindest teilweise in einer Cloud und/oder in einer Edge-Computing-Umgebung ausgeführt werden. Die Verarbeitungseinheit der Anordnung kann hardwaretechnisch und/oder auch softwaretechnisch implementiert sein. Bei einer hardwaretechnischen Implementierung kann die Verarbeitungseinheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Anordnung entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei werden Fachleute auch Einzelaspekte als Verbesserungen oder Ergänzungen zu der jeweiligen Grundform der Erfindung hinzufügen. Es wird darauf hingewiesen, dass, unabhängig vom grammatikalischen Geschlecht eines bestimmten Begriffes, Personen mit männlicher, weiblicher oder anderer Geschlechteridentität mit umfasst sind.

Ein Ausführungsbeispiel der Erfindung wird nachfolgend anhand der Figuren näher erläutert. Dabei veranschaulichen jeweils in schematischer Darstellung:
- Fig. 1a: eine Anlage mit mehreren Funketiketten-Erfassungstoren;
- Fig. 1b: einen Signalverlauf von durch Antennen eines Funketiketten-Erfassungstors empfangenen Funksignalen;
- Fig. 2: eine Anordnung zum Bestimmen des Durchfahrens eines der Funketiketten-Erfassungstore aus Fig. 1;
- Fig. 3: einen Signalverlauf von mehreren Funksignalen von Funketiketten aus Fig. 1; und
- Fig. 4: eine Anlage mit mehreren Funketiketten-Erfassungstoren in sequenzieller Anordnung.

Insofern in den Figuren gleiche oder korrespondierende Bezugszeichen verwendet werden, bezeichnen diese Bezugszeichen gleiche oder korrespondierende Entitäten, die insbesondere wie im Zusammenhang mit der betreffenden Figur beschrieben, implementiert oder ausgestaltet sein können.

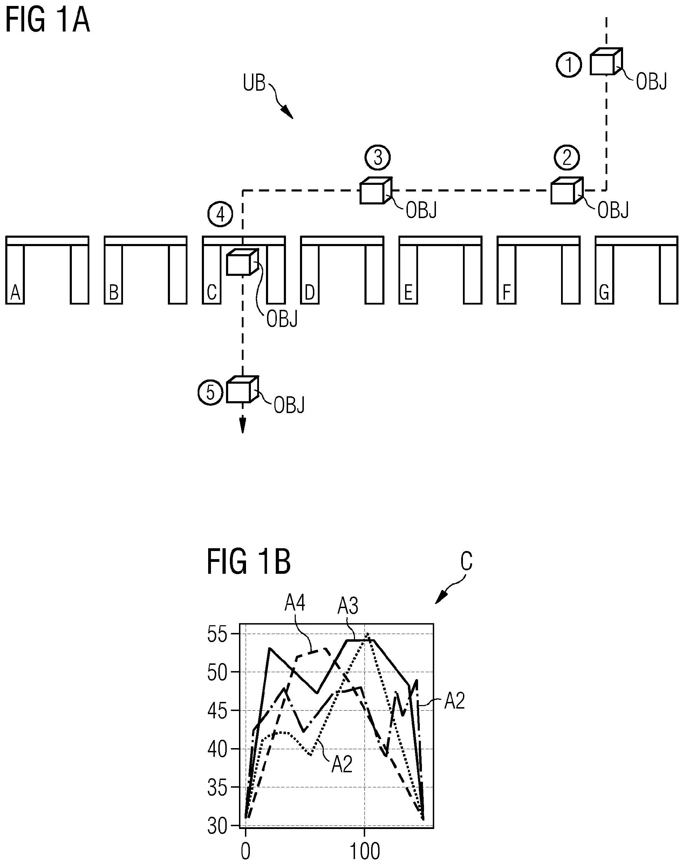

Fig. 1a zeigt eine Anordnung aus mehreren Funketiketten-Erfassungstoren A, B, C, D, E, F, G, beispielsweise in einem Lagerhaus. Die Tore A-G trennen hier im Beispiel den Lagerbereich innen (oberhalb der Tore A-G) von außen (unterhalb der Tore A-G). Beispielhaft wird ein Paket oder sonstiges Objekt OBJ, welches ein Funketikett RF, z.B. ein RFID-Tag, trägt von Position 1 bis Position 5 transportiert. Dabei durchquert es Tor C.

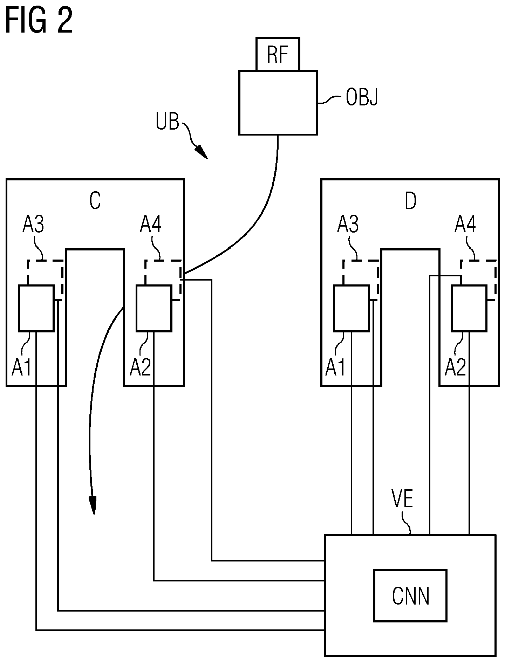

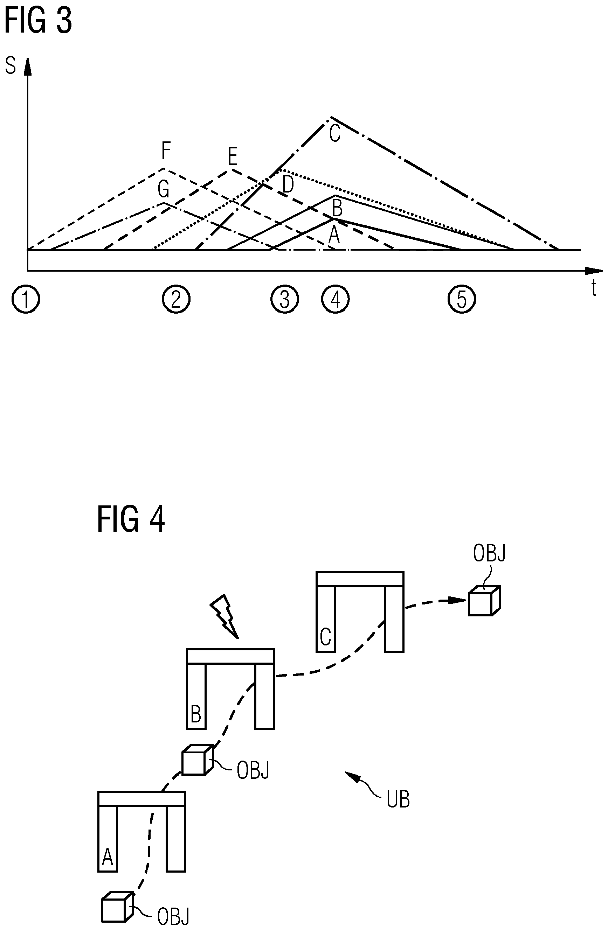

Jedes der Tore A-G ist mit einer Anzahl an Antennen A1-A4 ausgestattet (z.B. vier Antennen und in Fig. 2 beispielhaft gezeigt), die kontinuierlich Signale aller in der Umgebung, d.h. in einem Überwachungsbereich UB, befindlicher Funketiketten RF empfangen. Solche Signale sind beispielhaft in Figuren 1b und 3 gezeigt. Fig. 1b zeigt die Funksignale von einem Funketikett RF, die durch die Antennen A1-A4 eines Tors C über den Zeitraum von 150 diskreten Zeitschritten empfangen werden. Hierbei werden zuerst die Antennen A3 und A4, welche nach innen zeigen, das Funketikett RF mit hoher Signalstärke erkennen und danach die Antennen A1 und A2, welche nach außen zeigen. Fig. 1b zeigt nur die Paketdurchfahrt von Position/Zeitpunkt 4 nach Position 5. In den Zeitschritten vorher und nachher würde die Signalstärke für das dargestellte Funketikett von 0 kommend bzw. wieder auf 0 fallend verlaufen.

Während sich das Paket OBJ an mehreren Toren F, E, D in dem Überwachungsbereich UB vorbeibewegt und dann das Lagerhaus durch Tor C verlässt, empfängt jedes Tor A, B, C, D, E, F, G die Funksignale des Funketiketts RF, während es im jeweiligen Empfangsbereich ist. Diese Daten können gesammelt und weiterverarbeitet werden, wie im Folgenden beschrieben wird.

Die empfangenen Funksignale sind beispielhaft in Fig. 3 gezeigt. Zur Vereinfachung der Darstellung sind die Signaldaten der Antennen A1-A4 pro Tor A, B, C, D, E, F, G in nur einer Kurve zusammengefasst. Auf der X-Achse sind die markierten Positionen 1-5, die über die Zeit t durch das Funketikett RF abgefahren werden, eingetragen. Zeitlich von links nach rechts sieht man wie zuerst die Tore E, F und G Signale des Funketiketts RF empfangen. Zeitlich danach empfangen auch die Tore A, B, C und D die Signale des Funketiketts RF. Da das Paket OBJ Tor C passiert (also den Antennen A1-A4 des Tors C am nächsten kommt), hat die Signalkurve dieses Tores C die höchsten Signalwerte, wie durch den Wert der Signale S auf der Y-Achse zu sehen ist.

Im Gegensatz zu bisherigen Systemen, bei denen die Bestimmung, durch welches Tor A-G sich das Funketikett RF bewegt hat, auf den Daten dieses einen Tores A, B, C, D, E, F oder G basiert, werden bei dem vorliegenden Verfahren, das durch die gezeigte Anordnung ausgeführt wird, nicht nur die Daten eines einzigen Tores A, B, C, D, E, F oder G verwendet. Vielmehr werden die von diesen Toren A-G empfangenen Funksignale (siehe Fig. 3) alle berücksichtigt und in die Bewertung miteinbezogen.

Wie in Fig. 2 ausschnittsweise gezeigt ist, werden von den Antennen A1-A4 der Tore C und D (und den übrigen in Fig. 1a gezeigten Toren A, B, E, F, G) Funksignale von dem Funketikett RF empfangen. Diese Funksignale, bzw. deren Signalstärkenverläufe werden dann an eine Verarbeitungseinheit VE weitergeleitet. Diese Verarbeitungseinheit VE kann ein Maschinenlernmodul CNN aufweisen oder als ein solches implementiert sein.

Das Maschinenlernmodul CNN wertet dann nicht nur die Signale der Tore A-G unabhängig voneinander aus, sondern ermittelt basierend auf allen vorhandenen Daten der Tore A-G eine Durchfahrt eines Tores, in diesem Beispiel des Tores C. Dies hat den Vorteil, dass auch dann, wenn eines der Tore, z.B. C, eine tatsächliche Durchfahrt mit einer hohen Unsicherheit prognostizieren würde, diese Unsicherheit durch die weiteren Informationen der anderen Tore A-G aufgehoben werden kann. Eine Gesamtprognose ist somit zuverlässiger und robuster und kann somit mit einer höheren Sicherheit ausgegeben werden.

Beispielsweise kann das Maschinenlernmodul CNN einen Vergleich der Signalstärkenverläufe der verschiedenen Tore A-G vornehmen. Das Tor C, das den vergleichsweise höchsten Signalstärkeverlauf zeigt (siehe Fig. 3), wird dann als das Tor prognostiziert, durch welches das Funketikett RF durchgefahren ist.

Das Maschinenlernmodul CNN kann auch verwendet werden, um eine Durchfahrt eines Tores B zu bestimmen, das in Reihe mit den Toren A und C angeordnet ist, wie in Fig. 4 dargestellt ist.

In diesem Beispiel passiert das Objekt OBJ mit dem Funketikett RF aufeinanderfolgend zwei oder mehr Antennentore A, B, C. Ist das Tor B entweder gestört oder nicht mit Antennen A1-A4 ausgestattet, kann der zeitliche Zusammenhang der Durchfahrten der Tore A und C verwendet werden, um eine Durchfahrt durch Tor B zu bestimmen. So können die Zeitpunkte der Durchquerung der Tore A und C als Begrenzung eines Zeitintervalls dienen, in dem auch eine Durchfahrt durch Tor B erfolgt sein muss. Hierbei werden entsprechende bauliche Gegebenheiten vorausgesetzt, so dass z.B. ausgeschlossen werden kann, dass Tor B umfahren wurde.

Ohne weitere Sensorik (wie optische Kameras oder Lichtschranken) kann auf diese Weise auch eine Durchfahrt eines Tors B erkannt werden, ohne dass dieses selbst eine Bestimmung der Durchfahrt durchführen muss.

Die Daten, die auf diese Weise gesammelt werden, können auch als Trainingsdaten für das Maschinenlernmodul CNN zur Durchfahrtserkennung auf dem mittleren Tor B gewonnen werden, indem die bekannten Informationen (d.h. Objekt kommt aus Richtung von A und verlässt das Tor in Richtung von C) als Label mit den im Zeitfenster aufgezeichneten Daten in Relation gebracht wird. Auf diese Weise können Trainingsdaten für Funketiketten-Erfassungstore im laufenden Betrieb einer Fabrik oder eines Lagerzentrums gesammelt werden, um (automatisiert) angepasste Modelle für noch nicht mit einem solchen Maschinenlernmodul CNN ausgestattete Tore neu zu erstellen oder vorhandene Modelle nachzujustieren.

Obwohl die vorliegende Erfindung anhand von Ausführungsbeispielen beschrieben wurde, ist sie vielfältig modifizierbar.

### Bezugszeichenliste

- 1 - 5: Zeitpunkte/Positionen
- A1 - A4: Antennen
- A: Funketiketten-Erfassungstor
- B: Funketiketten-Erfassungstor
- C: Funketiketten-Erfassungstor
- CNN: Maschinenlernmodul
- D: Funketiketten-Erfassungstor
- E: Funketiketten-Erfassungstor
- F: Funketiketten-Erfassungstor
- G: Funketiketten-Erfassungstor
- OBJ: Objekt
- RF: Funketikett
- S: Signale
- t: Zeit
- UB: Überwachungsbereich
- VE: Verarbeitungseinheit

## Patentansprüche

1. Verfahren zum Bestimmen eines Durchfahrens eines Funketiketten-Erfassungstors (A, B, C, D, E, F, G) durch ein Funketikett (RF) in einem Überwachungsbereich (UB), wobei mehrere Funketiketten-Erfassungstore (A, B, C, D, E, F, G) in dem Überwachungsbereich (UB) angeordnet sind, wobei die Funketiketten-Erfassungstore (A, B, C, D, E, F, G) eine oder mehrere Antennen aufweisen, um Funksignale eines Funketiketts (RF) in dem Überwachungsbereich (UB) zu empfangen, wobei das Verfahren die Schritte aufweist:
a) Empfangen von Funksignalen eines Funketiketts (RF) durch zumindest eines der mehreren Funketiketten-Erfassungstore (A, B, C, D, E, F, G),
b) Erfassen des Signalstärkeverlaufs jedes der durch zumindest eines der mehreren Funketiketten-Erfassungstore (A, B, C, D, E, F, G) empfangenen Funksignale, und
c) Bestimmen, welches der mehreren Funketiketten-Erfassungstore (A, B, C, D, E, F, G) durch das Funketikett (RF) durchfahren wurde, basierend auf den erfassten Signalstärkeverläufen.

2. Verfahren nach Anspruch 1, **dadurch gekennzeichnet, dass** jedes der Funketiketten-Erfassungstore (A, B, C, D, E, F, G) ein Funksignal von dem Funketikett (RF) empfängt und der Signalstärkeverlauf jedes empfangenen Funksignals bestimmt wird.

3. Verfahren nach einem der vorhergehenden Ansprüche, **dadurch gekennzeichnet, dass** ein Maschinenlernmodul (CNN) eine Einzelprognose für jedes Funketiketten-Erfassungstor (A, B, C, D, E, F, G) basierend auf dem jeweiligen durch das entsprechende Funketiketten-Erfassungstor (A, B, C, D, E, F, G) erfassten Signalverlauf bestimmt und die Einzelprognosen aggregiert, um zu bestimmen, welches der mehreren Funketiketten-Erfassungstore (A, B, C, D, E, F, G) durchfahren wurde.

4. Verfahren nach einem der vorhergehenden Ansprüche, **dadurch gekennzeichnet, dass** ein Maschinenlernmodul (CNN) die von den einzelnen Funketiketten-Erfassungstoren (A, B, C, D, E, F, G) erfassten Signalverläufe aggregiert und eine Gesamtprognose erzeugt, um zu bestimmen, welches der mehreren Funketiketten-Erfassungstore (A, B, C, D, E, F, G) durchfahren wurde.

5. Verfahren nach einem der vorhergehenden Ansprüche, **dadurch gekennzeichnet, dass** das Bestimmen, welches der mehreren Funketiketten-Erfassungstore (A, B, C, D, E, F, G) durch das Funketikett (RF) durchfahren wurde, einen Vergleich der Signalstärken der erfassten Signalstärkeverläufen aufweist.

6. Verfahren nach einem der vorhergehenden Ansprüche, **dadurch gekennzeichnet, dass**, wenn detektiert wird, dass ein Funketiketten-Erfassungstor (A, B, C, D, E, F, G) eine Störung aufweist, ein Durchfahren dieses Funketiketten-Erfassungstors (A, B, C, D, E, F, G) basierend auf den durch die anderen Funketiketten-Erfassungstore (A, B, C, D, E, F, G) erfassten Signalstärkeverläufen bestimmt wird.

7. Verfahren nach Anspruch 6, **dadurch gekennzeichnet, dass** eine Störung eines Funketiketten-Erfassungstors (A, B, C, D, E, F, G) detektiert wird, wenn die durch das entsprechende Funketiketten-Erfassungstor (A, B, C, D, E, F, G) erfassten Signalstärkeverläufe aus vorherigen Daten unbekannt sind.

8. Verfahren nach einem der vorhergehenden Ansprüche, **dadurch gekennzeichnet, dass** die Anordnung der Funketiketten-Erfassungstore (A, B, C, D, E, F, G) in dem Überwachungsbereich (UB) bekannt ist, und dass das Durchfahren eines der Funketiketten-Erfassungstore (A, B, C, D, E, F, G) durch das Bestimmen eines zeitlichen Zusammenhangs zwischen den erfassten Signalstärkeverläufen benachbarter Funketiketten-Erfassungstore (A, B, C, D, E, F, G) bestimmt wird.

9. Verfahren nach einem der vorhergehenden Ansprüche, **dadurch gekennzeichnet, dass** die Schritte a) bis c) in einer Trainingsphase eines Maschinenlernmoduls (CNN) durchgeführt werden, wobei die Signalstärkeverläufe als Trainingsdaten in das Maschinenlernmodul (CNN) eingegeben werden.

10. Verfahren nach Anspruch 9, **dadurch gekennzeichnet, dass** das Maschinenlernmodul (CNN) Positionsinformationen des Funketiketts (RF) und/oder eine Anordnung der Funketiketten-Erfassungstore (A, B, C, D, E, F, G) als Trainingsdaten empfängt.

11. Verfahren nach Anspruch 9 oder 10, **dadurch gekennzeichnet, dass** das Maschinenlernmodul (CNN) in zumindest einem der Funketiketten-Erfassungstore (A, B, C, D, E, F, G) eingesetzt wird, um eine Bestimmung des Durchfahrens des Funketiketten-Erfassungstors (A, B, C, D, E, F, G) durchzuführen.

12. Verfahren nach einem der Ansprüche 9 bis 11, **dadurch gekennzeichnet, dass** die Schritte a) bis c) zum Nachtrainieren des Maschinenlernmoduls (CNN) durchgeführt werden.

13. Anordnung zum Bestimmen eines Durchfahrens eines Funketiketten-Erfassungstors (A, B, C, D, E, F, G) durch ein Funketikett (RF) in einem Überwachungsbereich (UB), wobei die Anordnung zum Ausführen der Verfahrensschritte eines Verfahrens gemäß einem der Ansprüche 1 bis 12 ausgebildet ist.

14. Anordnung nach Anspruch 13, **dadurch gekennzeichnet, dass** die Anordnung mehrere Funketiketten-Erfassungstore (A, B, C, D, E, F, G) aufweist, die in einem Überwachungsbereich (UB) angeordnet sind und jeweils dazu ausgebildet sind, ein Funksignal von einem Funketikett (RF) zu empfangen und einen Signalstärkeverlauf des empfangenen Funksignals zu bestimmen, und dass die Anordnung eine Verarbeitungseinheit (VE) aufweist, die dazu ausgebildet ist, die Signalstärkeverläufe von den Funketiketten-Erfassungstoren (A, B, C, D, E, F, G) zu empfangen und basierend auf den erfassten Signalstärkeverläufen zu bestimmen, welches der mehreren Funketiketten-Erfassungstore (A, B, C, D, E, F, G) durch das Funketikett (RF) durchfahren wurde.

15. Anordnung nach Anspruch 14, **dadurch gekennzeichnet, dass** die Verarbeitungseinheit (VE) ein Maschinenlernmodul (CNN) aufweist.
